# EUROPÄISCHE PATENTSCHRIFT

(11) **EP 3 609 761 B1**
(45) Veröffentlichungstag und Bekanntmachung des Hinweises auf die Patenterteilung: **09.06.2021**
(21) Anmeldenummer: 18719467.5
(22) Anmeldetag: 09.04.2018
(51) Int. Cl.: B61F 5/06, B60G 17/00, B61F 5/22

(54) **NIVEAUREGELSYSTEM FÜR EIN SCHIENENFAHRZEUG**
LEVEL CONTROL SYSTEM FOR A RAIL VEHICLE
SYSTÈME CORRECTEUR D'ASSIETTE POUR VÉHICULE FERROVIAIRE

(30) Priorität: 11.04.2017 DE 102017107798
(43) Veröffentlichungstag der Anmeldung: 19.02.2020
(73) Patentinhaber: KNORR-BREMSE Systeme für Schienenfahrzeuge GmbH, 80809 München (DE)
(72) Erfinder: NIES, Eduard, 82178 Puchheim (DE); WERMUND, Ulrich, 80469 München (DE); LOEBNER, Reinhard, 81829 München (DE); MUHR, Jürgen, 82284 Grafrath (DE); LEHMAIR, Martin, 80935 München (DE)
(86) Internationale Anmeldenummer: PCT/EP2018/058968
(87) Internationale Veröffentlichungsnummer: WO 2018/189072

(56) Entgegenhaltungen:
- EP-A2- 1 391 331
- EP-B1- 1 874 571
- DE-A1-102006 027 388
- DE-A1-102015 016 024

## Beschreibung

Die vorliegende Erfindung betrifft ein Niveauregelsystem für ein Schienenfahrzeug mit wenigstens einem hydraulisch betätigbaren Niveauregelzylinder und einem Niveauregelkolben, wobei im Niveauregelkolben der Niveauregelzylinder beweglich geführt ist zur Einstellung des Niveaus des Schienenfahrzeugs.

Aus dem Stand der Technik sind bereits Niveauregelsysteme für Schienenfahrzeuge bekannt, mittels derer die Höhe zwischen dem Fahrgestell und dem Wagenkasten zur Niveauregelung des Wagenkastens des Schienenfahrzeugs eingestellt werden kann.

Ein System des eingangs genannten Typs ist zum Beispiel aus der DE 10 2006 027388 A1 bekannt. Die DE 10 2006 027388 A1 offenbart ein Federsystem mit einem Federbein zur Anordnung zwischen Drehgestell und Wagenkasten eines Schienenfahrzeuges mit einem Zylinder und einem in dem Zylinder verschieblich aufgenommenen Kolben, die einen Kolbenraum begrenzen, wobei der Kolben oder der Zylinder mit dem Drehgestell und das andere der Bauteile mit dem Wagenkasten verbindbar ist, sowie mit einer oder mehreren Federn, die den Wagenkasten gegenüber dem Drehgestell abfedern, mit einem nicht federnden Hydrauliksystem, das mit dem Kolbenraum in Verbindung steht und mittels dessen die Menge des Hydraulikmediums in dem Kolbenraum zum Zwecke der Verstellung der Federbeinlänge veränderbar ist, wobei ein Anschlagelement vorgesehen ist, mittels dessen die Endposition des Kolbens im Zylinder veränderbar ist, und wobei Mittel vorgesehen sind, die derart ausgeführt sind, dass sie das Anschlagelement betätigen, wenn der Kolbenraum oder das Hydrauliksystem drucklos ist oder der Druck in dem Kolbenraum oder in dem Hydrauliksystem einen Wert unterschreitet.

Darüber hinaus ist aus der DE 10 2015 016 024 A1 bereits ein Federsystem eines Schienenfahrzeugs mit einem Federbein zur Anordnung zwischen Drehgestell und Wagenkasten des Schienenfahrzeuges bekannt, wobei das Federbein einen Zylinder und einen in dem Zylinder verschieblich aufgenommenen Kolben aufweist, die Kolbenräume unterhalb und oberhalb des Kolbenkopfes begrenzen, wobei der Kolben oder der Zylinder unmittelbar oder mittelbar mit dem Drehgestell und das andere der Bauteile unmittelbar oder mittelbar mit dem Wagenkasten verbindbar sind, sowie mit einer Feder, die derart angeordnet ist, dass diese den Wagenkasten gegenüber dem Drehgestell abfedert, wobei das Federsystem ein Hydrauliksystem aufweist, das mit wenigstens einem der Kolbenräume derart in Verbindung steht, dass dieser mit Hydraulikmedium beaufschlagbar ist, und wobei die Kolbenräume derart angeordnet sind, dass die Feder dann durch den Kolben zusammengezogen wird, wenn im unteren Kolbenraum gegenüber dem oberen Kolbenraum ein Überdruck herrscht, wobei die Feder den Zylinder umgibt, dass ein Mitnahmeelement vorgesehen ist, an das die Feder angrenzt, dass der Kolben und insbesondere dessen Kolbenstange derart angeordnet ist, dass dieser/diese nur dann auf das Mitnahmeelement eine Kraft ausübt, wenn im unteren Kolbenraum gegenüber dem oberen Kolbenraum ein Überdruck herrscht.

Aus der EP 1 874 571 B1 ist eine Vorrichtung zur Sekundärfederung für ein Schienenfahrzeug bekannt. Eine Sekundärfederung zwischen einem Wagenkasten und einem spurgebundenen Drehgestell eines Schienenfahrzeuges kommt insbesondere zur zusätzlichen Schwingungsisolierung des Wagenkastens zum Einsatz, um Im Personenverkehr eine komfortable Fahrt zu ermöglichen. In vielen Fällen wirkt die Sekundärfederung auch mit einer Wanksteuerung für den Wagenkasten zusammen. Neben der Sekundärfederung zur Komfortsteigerung weist ein Schienenfahrzeug der hier interessierenden Art auch eine Primärfederung auf. Die Primärfederung wirkt zwischen den Radachsen des Schienenfahrzeuges und dem Drehgestell und dient vornehmlich der Absorption harter Stöße, welchen das Schienenfahrzeug während der Fahrt aufgrund ungleichmäßiger Schienenführung und dergleichen ausgesetzt ist.

Aus der DE 103 15 000 A1 geht eine Vorrichtung zur Sekundärfederung hervor. Zur Sekundärfederung ist zwischen dem Drehgestell und dem Wagenkasten ein Federelement vorgesehen, welches eine aktive hydraulische Feder, Gasfeder oder dergleichen oder aber auch eine passive Feder in Form einer nach Art einer Druckfeder ausgebildeten Stahlfeder oder dergleichen sein kann. Zum Federelement ist zwischen dem Drehgestell und dem Wagenkasten ein Zugzylinder vorgesehen, mit welchem eine gegen die Kraft des Federelements wirkende Rückstellkraft erzeugbar ist, um den Wagenkasten aus dem angehobenen Fahrtniveau in ein abgesenktes Bahnsteigniveau (Lade-/Endladepositlon) zu bringen und zu halten. Eine Deaktivierung des Zugzylinders bewirkt, dass der Wagenkasten von der Rückstellkraft der Federstufe wieder in das angehobene Fahrtniveau gelangt. Bei dem Zugzylinder handelt es sich hier um einen einseitig beaufschlagbaren Hydraulikzylinder. Damit die Zugwirkung eintritt, also die Kolbenstange bei Druckmittelbeaufschlagung in den Zylinderkörper des Zugzylinders eintaucht, erfolgt eine zylinderdeckelseitige Druckmittelbeaufschlagung des innenliegenden Kolbens.

Insbesondere geht aus der DE 103 15 000 A1 ein Schienenfahrzeug mit einem Unterbau und einem darüber angeordneten Wagenkasten hervor, wobei zwischen dem Wagenkasten und dem Unterbau eine Federstufe vorgesehen ist, wobei zwischen dem Wagenkasten und dem Unterbau zumindest ein Aktuator vorgesehen ist, der dazu eingerichtet ist, gegen eine von der Federstufe hervorgerufene Rückstellkraft den Wagenkasten aus einer gehobenen Fahrposition in eine abgesenkte Lade/Entladeposition zu bringen und in der Lade/Entladeposition zu halten, wobei der Wagenkasten bei Deaktivieren des Aktuators von der Rückstellkraft in eine Fahrposition gehoben ist.

Aus der US 9,315,203 B2 ist ebenfalls ein Niveauregelsystem für ein Schienenfahrzeug bekannt, das mittels Hydraulikzylindern den Wagenkasten des Schienenfahrzeugs anheben kann. Dabei sind die Hydraulikzylindern aber mit dem Fahrgestell des Schienenfahrzeugs verbunden.

Es ist die Aufgabe der vorliegenden Erfindung, ein Niveauregelsystem eines Schienenfahrzeugs der eingangs genannten Art in vorteilhafter Weise weiterzubilden, insbesondere dahingehend, dass das Niveauregelsystem kompakter gebaut werden kann, eine Niveauverstellung des Schienenfahrzeugs ermöglicht und zugleich eine Fixierung In mehreren Positionen zur Verschleißanpassung und Nachjustierung zu ermöglichen. Diese Aufgabe wird erfindungsgemäß gelöst durch ein Niveauregelsystem für ein Schienenfahrzeug, mit den Merkmalen des Anspruchs 1. Danach ist vorgesehen, dass Niveauregelsystem für ein Schienenfahrzeug, mit wenigstens einem Niveauregelzylinder und einem Niveauregelkolben versehen ist, wobei im Niveauregelzylinder der Niveauregelkolben beweglich geführt ist zur Einstellung des Niveaus des Schienenfahrzeugs, wobei der Niveauregelkolben eine äußere Kolbenhülse und einen in der Kolbenhülse zumindest teilweise aufgenommenen Kolbengrundkörper aufweist, und wobei der Kolbengrundkörper relativ zur Kolbenhülse zur Nachjustierung verschieblich ist und in wenigstens zwei Verstellpositionen feststellbar und/oder fixierbar ist.

Die Erfindung basiert auf dem Grundgedanken, in einem Niveauregelsystem für ein Schienenfahrzeug, sowohl Im Niveauregelzylinder eine eintellbare Hubhöhe vorzusehen, mit der das Niveau des Schienenfahrzeugs zum Untergrund oder zu einer Plattform wie einem Bahnsteig reguliert werden kann. Gleichzeitig soll aber auch direkt eine Einstellmöglichkeit vorgesehen sein, mittels derer der Radreifenverschleiß des Schienenfahrzeugs, aber auch der Schienenverschleiß, nachjustiert werden kann. Die Möglichkeit zur Niveauregulierung und gleichzeitig die Möglichkeit zur Nachjustierung und Korrektur des Radreifen- bzw. Schienenverschleißes sind dabei in das Niveauregelsystem direkt integriert und zwar derart, dass dies eine kompakte Bauweise ermöglicht. Insbesondere sind Verschleißnachjustierung und Niveauregulierung nicht axial versetzt zueinander, sondern parallel zueinander bzw. ineindergeschachtelt angeordnet. Dies wird insbesondere dadurch erreicht, dass der Niveauregelzylinder mit seiner äußeren Kolbenhülse und des Kolbengrundkörpers einerseits das Element bereitstellt, mittels dessen die Hubhöhe für die Niveauregulierung eingestellt werden kann und teleskopartig hierzu zwischen Kolbenhülse und Kolbengrundkörper eine Verschleißnachjustierung vorgesehen ist. Die Verschleißnachjustierung ist dabei nicht axial versetzt angeordnet zum Niveauregelkolben, sondern in den Niveauregelkolben direkt integriert. Somit ist die axiale Verstellung zur Niveauregulierung als auch die axiale Verstellung zur Regulierung und Nachjustierung des Radreifen- und/oder Schienenverschleißes nicht axial zueinander versetzt, sondern radial versetzt angeordnet. Bei der Nachjustierung kann es sich insbesondere um eine Verschleißnachjustierung handeln.

Darüber hinaus kann vorgesehen sein, dass der Niveauregelzylinder hydraulisch betätigbar ist. Durch eine hydraulische Betätigung kann eine einfache, sichere und zuverlässige Betätigung des Niveauregelzylinders erreicht werden. Die notwendigen Arbeitsdrücke können insbesondere einfach und zuverlässig auch In den gewünschten Temperaturbereichen erreicht werden. Grundsätzlich ist aber auch eine pneumatische oder elektromechanische Betätigung oder auch eine magnetische Betätigung denkbar.

Es ist weiter möglich, dass der Kolbengrundkörper relativ zur Kolbenhülse zur Verschleißnachjustierung stufenlos verschieblich ist. Hierzu ist denkbar, dass die stufenlose Verschieblichkeit beispielsweise durch eine hydraulische Betätigung erreicht wird.

Darüber hinaus kann vorgesehen sein, dass die Verstellposition derart beschaffen und eingerichtet ist, dass sie eine Verrastung in der Verstellposition ermöglicht. Dadurch wird erreicht, dass die Verstellposition nach ihrer Einnahme nicht ohne weiteres verlassen werden kann. Die Betriebssicherheit kann hierdurch erhöht werden. Auch der Betrieb des Niveauregelsystems wird hierdurch vereinfacht.

Außerdem kann vorgesehen sein, dass das Niveauregelsystem weiter eine Sekundärfeder umfasst, die um den Niveauregelzylinder und den Niveauregelkolben herum geführt ist. Insbesondere kann es sich bei der Sekundärfeder um eine Schraubenfeder handeln. Die Sekundärfeder ist dabei insbesondere die übliche Sekundärfeder, wie sie bei Schienenfahrzeugen als Sekundärfeder zum Einsatz kommt. Die Primärfeder ist dabei die Hauptfeder im Fahrgestell, wohingegen die Sekundärfederung zwischen Fahrgestell und Wagenkasten angeordnet ist.

Außerdem kann vorgesehen sein, dass eine Verstellposition wenigstens eine Vertiefung aufweist. Durch die Vertiefungen kann eine Verstellposition einfach und sicher aufgesucht werden, da insbesondere ein Erreichen der Verstellposition hierdurch sicher festgestellt oder gar auch automatisiert erreicht werden kann.

Weiter kann vorgesehen sein, dass wenigstens ein Sicherungsring, insbesondere ein Sprengring, und/oder wenigstens eine Feststellschraube und/oder wenigstens ein Sicherungsstift und/oder wenigstens ein Bajonettsystem und/oder wenigstens eine Kugel, insbesondere eine federbelastete Kugel, und/oder wenigstens ein Magnet und/oder ein Klemmelement und/oder Gewindeelement vorgesehen ist, der bzw. das in der Verstellposition zur Fixierung eingreift. Das Gewindeelement kann beispielsweise ein Rundgewinde oder ein Trapezgewinde sein.

Beispielsweise durch Vertiefung und Sicherungsring kann ein einfaches und zuverlässiges Einrasten ermöglicht werden. Denkbar ist beispielsweise, dass es sich bei dem Sicherungsring um einen Sprengring handelt. Der Sprengring kann dabei zumindest teilweise elastisch oder federartig ausgebildet sein, so dass bei einer Bewegung zwischen zwei Rastpositionen der Sicherungsring zum einen derart zusammengedrückt wird, dass eine einfache Verschiebung möglich wird. Beim Erreichen der Rastposition und der zugehörigen Vertiefung springt der Sicherungsring sodann in die Vertiefung hinein und erzielt hierdurch die Verrastung. Gleiche Mechanismen können beispielsweise mit einem Sicherungsstift oder einer federbelasteten Kugel erreicht werden. Über die Feststellschraube kann nach Erreichen der Verstellposition die jeweilige Position gehalten werden. Hierzu können entsprechende Vertiefungen bzw. entsprechende Einschraublöcher für die Feststellschraube vorgesehen sein. Die Vertiefung kann hierbei durch die Gewindebohrung für die Feststellschraube bereitgestellt werden. Auch ein Bajonettsystem kann vorgesehen sein. Denkbar ist beispielsweise, dass das Bajonettsystem ein Stufenbajonettsystem ist, bei dem mehrere nacheinander vorhandene Bajonettstufen vorgesehen sind. Hierzu können in mehreren parallel zueinander angeordneten Bajonettrillen entsprechende Bajonettzapfen eingreifen, die nach Verlassen der Bajonettrillen in einem entsprechenden Führungsgang axial bezogen auf die Längsachse des Kolbens verschoben werden können, um eine weitere Axialrillenstufe zu erreichen.

Des Weiteren kann vorgesehen sein, dass der Kolbengrundkörper relativ zur Kolbenhülse durch Druckbeaufschlagung und/oder Druckabsenkung axial verschieblich ist. Durch entsprechende Druckeinstellung kann Nachjustierung und das Verschieben von Kolbengrundkörper relativ zur Kolbenhülse unterstützt werden. Hierzu wird beispielsweise der Arbeitsdruck im System von Niveauregelkolben und Niveauregelzylinder erhöht bzw. erniedrigt, wodurch dann eine entsprechende axiale Verstellung erfolgen kann.

Im bespielhaften Fall einer Bajonettlösung befinden sich die Bajonettzapfen im Bajonettgang. Da die Kolbenhülse mit dem Bund am Anschlagbund anliegt, wird nur der Kolben angehoben werden. Beim Erreichen der nächsten Bajonetstufe, kann die Kolbenhülse mit den Bajonettzapfen in die Bajonetrillen der nächsten Stufe gedreht werden.

Darüber hinaus kann vorgesehen sein, dass im und/oder am Kolbengrundkörper eine mechanische Verstellung, insbesondere eine Einstellschraube, aufgenommen oder vorgesehen ist, die im Kolbengrundkörper in wenigstens einer ersten Stellung und in wenigstens einer zweiten Stellung befindlich sein kann, wobei durch Überführung der Einstellschraube von der ersten Stellung in die zweite Stellung der Kolbengrundkörper relativ zur Kolbenhülse zur Verschleißnachjustierung von einer Verstellposition zu einer weiteren Verstellposition überführbar ist. Diese Überführbarkeit kann auch in weitere Rastpositionen bzw. reversibel ausgestaltet sein, d.h. dass eine Rückstellung entsprechend möglich ist. Über die mechanische Verstellung wird es einfach möglich, eine Nachjustierung und ein Nachstellen zum Ausgleich des Reifenverschleißes zu ermöglichen. Durch die Aufnahme der mechanischen Verstellung, insbesondere der Einstellschraube, in den Kolbengrundkörper wird darüber hinaus eine sehr kompakte Bauweise ermöglicht. Diese Überführbarkeit kann auch in weiteren Verstellpositionen bzw. reversibel ausgestaltet sein, d.h. dass eine Rückstellung entsprechend möglich ist.

Außerdem kann vorgesehen sein, dass der Kolbengrundkörper eine Einsenkung aufweist, in die Hydrauliköl einströmbar ist. Dabei kann insbesondere vorgesehen sein, dass die Einsenkung zylindrisch oder im Wesentlichen zylindrisch ist. Über die Einsenkung wird es einfach möglich, Hydrauliköl in das Kolben-Zylindersystem bestehend aus Kolbengrundkörper und Niveauregelzylinder einzuströmen. Hierüber kann dann auch der entsprechende Druckaufbau erfolgen, um die gewünschten Hubhöhen für die Niveauregulierung zu erreichen.

Insbesondere kann vorgesehen sein, dass die Niveauregulierung durch Einstellung der Hubhöhen stufenlos zwischen den jeweiligen Endanschlägen erfolgt. Dies kann insbesondere begrenzt sein durch entsprechende Endanschläge zwischen Niveauregelzylinder und Niveauregelkolben.

Denkbar ist insbesondere, dass in die Einsenkung ein Anschlagzapfen hineinragt. Über den Anschlagzapfen kann einer der Endanschläge zur Begrenzung der Hubhöhe erreicht werden. Der andere Endanschlag kann beispielsweise durch eine axiale Begrenzungsfläche des Kolbens und/oder Kolbenhülse erreicht werden, der bei maximalem Anschlag an einer weiteren axialen Begrenzungsfläche des Zylinders entsprechend anliegt.

Des Weiteren kann vorgesehen sein, dass der Anschlagzapfen einen im Wesentlichen umlaufenden Anschlagbund aufweist, wobei der Anschlagbund einen größeren Durchmesser aufweist, als eine zentrale Öffnung der Kolbenhülse, die der Anschlagzapfen im montierten Zustand durchdringt. Hierdurch wird gleichzeitig auch eine Verliersicherung zwischen Kolben und Zylinder erreicht. Insbesondere wird es nicht möglich, den Kolben hierdurch aus dem Zylinder komplett herauszuziehen. Der Anschlagzapfen kann zur entsprechenden einfacheren Montage hierzu entsprechend im Niveauregelzylinder lösbar befestigt sein.

Darüber hinaus ist denkbar, dass der Hydraulikkolben mehrere Hydraulikführungskanäle aufweist, durch die das Hydrauliköl in die Einsenkung einströmbar ist. Durch das Vorsehen mehrerer Hydraullkführungskanäle wird erreicht, dass das System in sehr kurzer Zeit eine andere Hubhöhe einstellen kann und das System insgesamt dynamisch betrieben werden kann. Dies ist insbesondere im Zusammenhang mit dem geplanten Einsatzfall, nämlich der Absenkung des Wagenkastens bei dem Einfahren des Zuges in einen Bahnsteig und dem dortigen Absenken des Wagenkastenniveaus von großem Interesse.

Die Hydraulikführungskanäle können insbesondere im Kolbengrundkörper angeordnet sind. Dabei kann es sich bei den Hydraulikführungskanälen um Kanäle handeln, die im Wesentlichen vollständig innerhalb des Kolbengrundkörpers verlaufen. Die Hydraulikführungskanäle können beispielsweise durch Bohrungen ausgebildet sein.

Bei dem Niveauregelsystem kann es sich um ein sogenanntes Push-Up-System handeln. Denkbar ist grundsätzlich aber auch, dass es sich bei dem Niveauregelsystem um ein sogenanntes Pull-Down-System handelt.

Des Weiteren kann vorgesehen sein, dass die Hydraulikölführungskanäle symmetrisch zueinander angeordnet sind. Durch die symmetrische Anordnung wird eine gleichmäßige Einströmung und das gleichmäßige Aufbauen des hydraulischen Drucks in der Einsenkung bzw. im Kolbenzylindersystem erreicht.

Außerdem ist denkbar, dass das Niveauregelsystem wenigstens eine Hubbegrenzung für den Hub des Niveauregelkolbens in Bezug auf den Niveauregelzylinder aufweist, insbesondere wobei die Hubbegrenzung einen axialen Abstand aufweist. Die axialen Anschläge können beispielsweise durch den Anschlagzapfen und Wandungen des Niveauregelzylinders bzw. Niveauregelkolbens, insbesondere der Kolbenhülse, ausgebildet sein. Insbesondere ist denkbar, dass ein Anschlag durch eine distale axiale Wandung des Niveauregelkolbens, insbesondere durch eine distale axiale Wandung der Kolbenhülse, und der entsprechenden Anschlagfläche im Niveauregelzylinder gebildet wird. Eine weitere Anschlagfläche wird beispielsweise durch den Anschlagzapfen ausgebildet. Der Anschlagzapfen greift dann entsprechend an einem Rand der Kolbenhülse an.

Des Weiteren kann vorgesehen sein, dass wenigstens eine Dichtung, insbesondere eine Radialdichtung, zwischen Niveauregelzylinder und Niveauregelkolben vorgesehen ist. Denkbar ist insbesondere, dass auf der Außenseite des Niveauregelkolbens, d.h. auf der Außenseite und Innenseite der Niveauregelkolbenhülse und dem Niveauregelzylinder eine Dichtung vorgesehen ist. Hierzu kann auch vorgesehen sein, dass mehrere Dichtungen vorgesehen sind. Derartige Dichtungen können beispielsweise aufvulkanisierte Radialdichtungen, O-Ringe oder Radialdichtringe sein.

Außerdem kann vorgesehen sein, dass der Niveauregelkolben und der Niveauregelzylinder koaxial zueinander sind. Dies erleichtert insgesamt die Bauweise und ermöglicht eine kompakte Bauform.

Weiter kann vorgesehen sein, dass die Einstellschraube koaxial mit dem Niveauregelkolben und dem Niveauregelzylinder ist. Hierdurch wird erreicht, dass eine gewünschte Niveauregulierung in vergleichsweise kurzer Zeit als auch die notwendigen Hubhöhen erreicht werden können. Außerdem wird erreicht, dass eine Verschleißnachstellung für den Radreifenverschleiß ermöglicht wird, und zwar nicht durch axialen Versatz der entsprechenden Elemente für die Verschleißnachstellung,sondern durch radialen Versatz. Ein insgesamt teleskopartiger Aufbau wird hierdurch erreicht.

Des Weiteren ist denkbar, dass die Sekundärfeder koaxial mit dem Niveauregelkolben und dem Niveauregelzylinder ist. Dadurch wird ein insgesamt kompakter Aufbau des Niveauregelsystems erreicht.

Weiter ist In diesem Zusammenhang auch denkbar, dass die Notfeder innerhalb der Sekundärfeder und ebenfalls koaxial mit der Sekundärfeder und dem Niveauregelkolben angeordnet ist.

Das Niveauregelsystem kann eine Verbindung zum Wagenkasten oder anderer am Wagenkasten befestigter Komponenten (z.B. einer Schichtfeder) aufweisen, wobei die Verbindung zum Wagenkasten auf Seiten des Nivesuregelkolbens realisiert sein kann. Dies ermöglicht eine optimale Ausgestaltung des Niveauregelsystems und Ausnutzung des Bauraumes. Darüber hinaus wird es erleichtert, die hydraulischen Anschlüsse in der Nähe des Wagenkastens für das Niveauregelsystem anzuordnen und entsprechend die Hydraulikversorgung bereitzustellen.

Weitere Einzelheiten und Vorteile der Erfindung sollen nun anhand eines in den Zeichnungen näher dargestellten Ausführungsbeispiels erläutert werden.

Es zeigen:
- Fig. 1: ein Ausführungsbeispiel eines erfindungsgemäßen Niveauregelsystems mit vollständig eingefahrenem Niveauregelzylinder, bei leerem Fahrzeug und nicht verschlissenen Radreifen;
- Fig.2: eine weitere schematische Schnittdarstellung des in Fig. 1 gezeigten Ausführungsbeispiels bei ausgefahrenem hydraulischen Niveauregelzylinder mit vollbeladenem Fahrzeug und nicht verschlissenen Radreifen;
- Fig. 3: eine weitere Ansicht des in Fig. 1 gezeigten Niveauregelsystems, hier jedoch mit ausgefahrenem hydraulischen Niveauregelzylinder und Nachjustierung des Radreifenverschleißes (voll ausgefahrene Verschleißnachjustierung) bei vollbeladenem Fahrzeug und komplett verschlissenen Radreifen;
- Fig. 4: eine Detaildarstellung der Verschleißnachjustierung des in Fig. 1 gezeigten Niveauregelsystems; und
- Flg. 5: eine schematische Detaildarstellung einer weiteren möglichen Ausführungsform mit einem radial außen liegenden Anschlag für die Kolbenhülse;
- Fig. 6: eine Detaildarstellung für ein mögliches System zur Verschleißnachjustierung in Form eines Stufen-Bajonetts;
- Fig. 7: die Verschleißnachjustierung mit einer Sicherungsschraube im Zusammenhang mit dem Stufen-Bajonett gemäß Fig. 6;
- Fig. 8: eine Detaildarstellung für das System gem. Fig. 6 zur Verschleißnachjustierung in Form eines Stufen-Bajonetts in einer weiteren Stellung; und
- Fig. 9: die Verschleißnachjustierung mit einer Sicherungsschraube im Zusammenhang mit dem Stufen-Bajonett gemäß Fig. 8.

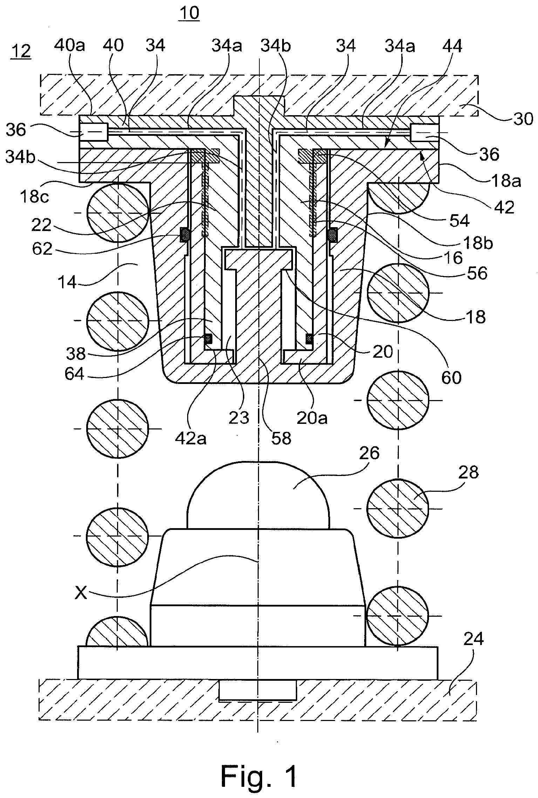

Fig. **1** zeigt in schematischer Schnittdarstellung ein erfindungsgemäßes Niveauregelungssystem 10 für ein Schienenfahrzeug 12.

Das Niveauregelsystem 10 weist dabei einen hydraulisch betätigbares Niveauregelzylindermodul 14 auf.

Das Niveauregelzyllndermodul 14 weist hier einen Niveauregelkolben 16 und einen Niveauregelzylinder 18 auf.

Der Niveauregelkolben 16 ist dabei beweglich im Niveauregelzylinder 18 geführt zur Einstellung des Niveaus des Schienenfahrzeugs 12.

Weiter weist der Niveauregelkolben 16 eine äußere Kolbenhülse 20 und einen in der Kolbenhülse 20 zumindest teilweise aufgenommenen Kolbengrundkörper 22 auf.

Weiter ist als Bestandteil des Niveauregelsystems 10 das Fahrwerk 24 gezeigt.

Am Fahrwerk 24 ist die Notfeder 26 angeordnet, die gleichzeitig auch die Druckfeder bzw. Sekundärfeder 28 führt bzw. an der die Sekundärfeder 28 aufliegt

Die Notfeder 26, die Sekundärfeder 28 sowie das Niveauregelzylindermodul 14 mit dem Niveauregelkolben 16 und dem Niveauregelzylinder 18 sind insgesamt koaxial bezogen auf die Längsachse des Nlveauregelkolbens 16 und des Niveauregelzylinders 18 ausgerichtet.

Mit anderen Worten weisen sämtliche dieser koaxialen Elemente eine gemeinsame gedachte Längsachse auf.

Diese gemeinsame Längsachse Ist in Fig. 1 mit dem Bezugszeichen X bezeichnet.

Das Niveauregelzylindermodul 14 ist direkt am Wagenkasten 30 oder Komponenten des Wagenkastens befestigt.

Das Niveauregelsystem 10 weist so eine Verbindung zum Wagenkasten aufweist, wobei die Verbindung zum Wagenkasten auf Seiten des Niveauregelkolbens 16 realisiert ist.

Im Kolbengrundkörper 22 sind Hydraulikölführungskanäle 34 vorgesehen. Die Hydraulikölführungskanäle 34 weisen jeweils Hydraulikanschlüsse 36 auf und sind zunächst in der gezeigten Ausrichtung waagrecht angeordnet.

Die Hydraulikölführungskanäle 34 sind dabei durch Bohrungen im Kolbengrundkörper 22 ausgebildet.

Die waagrechten Abschnitte der Hydraulikölführungskanäle 34 sind mit dem Bezugszeichen 34a bezeichnet, die senkrechte Abschnitte mit dem Bezugszeichen 34b.

Der Kolbengrundkörper 22 ist weiter hutartig ausgebildet, d.h. er weist einen zylindrischen ersten Abschnitt 38 auf, der einen kleineren Durchmesser aufweist als ein zweiter Abschnitt 40, der sich radial weiter nach außen erstreckt und mit seiner Außenfläche 40a am Wagenkasten 30 direkt anliegt.

Die dem Wagenkasten 30 abgewandte radiale Anschlagfläche 42 des Kolbengrundkörpers 22 dient als Anschlagfläche 42 für den Niveauregelzylinder 18, der eine entsprechende Gegenfläche 44 an einem flanschartigen Abschnitt 18a aufweist. Alternativ kann als Anschlagsfläche auch das untere Ende der Kolbenhülse 20a dienen, die dann in Kontakt mit dem Zylinderboden mit der Anschlagfläche 20b steht.

Der Niveauregelzylinder 18 weist auf seiner Außenseite eine zylindrische Führungsfläche 18b und eine axiale Anlagefläche 18c für die Sekundärfeder 28 auf.

Die Kolbenhülse 20 nimmt den Kolbengrundkörper 22 auf und umgreift den Kolbengrundkörper 22 an seinem distalen Ende, d.h. dem dem Wagenkasten 30 abgewandten Ende des Kolbengrundkörpers 22, und zwar radial nach innen gewandt.

Die Kolbenhülse 20 weist hierzu eine ringartige, nach innen gewandte Wandung 20a auf, die eine axiale Anschlagfläche 42a für das distale Ende des Kolbengrundkörpers 22 aufweist.

Der Kolbengrundkörper 22 weist eine Einsenkung 23 auf, die sich im Inneren des Kolbengrundkörpers 22 befindet und als koaxiale zylindrische Einsenkung 23 bezogen auf die Längsachse des Kolbengrundkörpers 22 ausgebildet ist.

In diese Einsenkung 23 münden die Hydrauliköfführungskanäle 34.

Die Hydraulikölführungskanäle 34 sind insgesamt symmetrisch zueinander ausgebildet.

Dabei sind die in die Einsenkung 23 mündenden Abschnitte der Hydraulikölführungskanäle 34 im Wesentlichen parallel zur Längsachse angeordnet und im zweiten flanschartigen Abschnitt 40 des Kolbengrundkörpers 22 im Wesentlichen senkrecht hierzu.

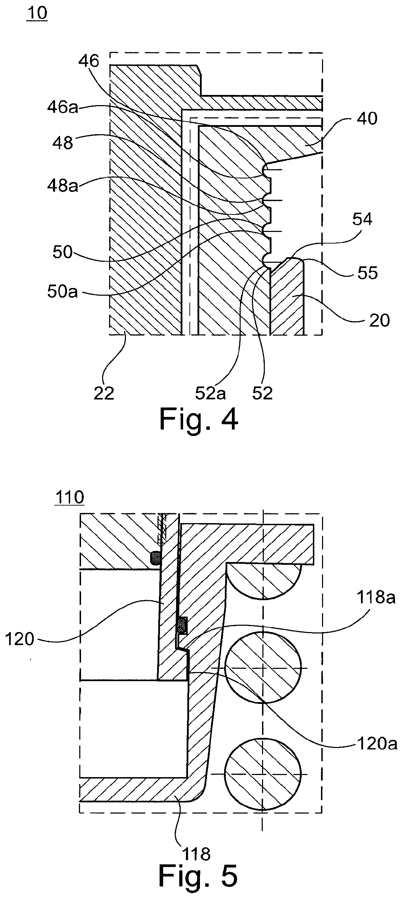

Der Kolbengrundkörper 22 ist relativ zur Kolbenhülse 20 zur Verechleißnachjustierung verschieblich und weist hierzu mehrere Rastpositionen 46, 48, 50, 52 auf (vgl. hierzu auch Fig. 4).

Jede der Verstellpositionen bzw. hier Rastpositionen 46, 48, 50, 52 weist dabei eine Vertiefung 46a, 48a, 50a, 52a auf.

Die Vertiefung 46a, 48a, 50a, 52a kann dabei nur in der Kolbenhülse 20 oder nur im Kolbengrundkörper 22 vorgesehen sein.

Im gezeigten Ausführungsbeispiel gem. Fig 1 und Fig. 4 ist die Vertiefung 46a, 48a, 50a, 52a nur als Vertiefung 46a, 48a, 50a, 52a auf Seiten des Kolbengrundkörpers 22 vorhanden.

Außerdem ist ein Sprengring 54 vorgesehen, der als Sicherungsring dient und in die jeweils eingestellte Vertiefung 46a, 48a, 50a, 52a entsprechend einspringt und dort eine Verrastung bewirkt. In Fig. 4 sitzt der Sprengring in der gezeigten Situation In der Vertiefung 52a der Rastposition 52.

Der Sprengring 54 ist im Wesentlichen zwischen Kolbenhülse 20 und Kolbengrundkörper 22 in einem Keilspalt 55 angeordnet.

Der Keilspalt 55 ist dabei im Wesentlichen durch eine Schräge oder Abfasung in der Kolbenhülse 20 ausgebildet.

Hierdurch wird einerseits ein Herausgleiten des Sprengrings 54 aus den Vertiefungen 46a, 48a, 50a, 52a ermöglicht, gleichzeitig aber auch ein sicheres Fixieren des Sprengrings in der Verstellposition und Vertiefung auf.

Zum Zwecke der Verschleißnachjustierung ist ein mechanisches Verstellmittel 56 vorgesehen, das im Kolbengrundkörper 22 angeordnet ist (nur schematisch dargestellt).

Das Verstellmittel 56 kann dabei mehrere Stellungen einnehmen und beispielsweise zur rotatorischen und axialen Verstellung von Kolbenhülse 20 und Kolbengrundkörper 22 dienen, wobei durch Überführung der Einstellschraube 56 von einer ersten Stellung in eine zweite Stellung der Kolbengrundkörper 22 relativ zur Kolbenhülse 20 zur Verschleißnachjustierung von einer Rastposition 46, 48, 50, 52 in eine weitere Rastposition 46, 48, 50, 52 überführt wird.

Dabei ist eine reversible Einstellung unter den Rastpositionen 46, 48, 50, 52 jeweils möglich.

Im Boden des Niveauregelzylinders 18 ist ein Anschlagzapfen 58 vorgesehen, der im montierten Zustand in die Einsenkung des Kolbengrundkörpers 22 hineinragt.

Der Anschlagzapfen 58 weist einen im Wesentlichen umlaufenden Anschlagbund 60 auf, wobei der Anschlagbund 60 einen größeren Durchmesser aufweist, als die zentrale Öffnung der Kolbenhülse 20, die der Anschlagzapfen 58 im montierten Zustand durchdringt.

Denkbar ist, dass der Anschlagzapfen 58 mehrteilig ausgebildet ist, wobei der Anschlagzapfen teilweise einstückig an den Niveauregelzylinders 18 angeformt ist.

Ein Teil des Anschlagzapfens 58 kann beispielsweise reversibel auf einen Anschlagzapfengrundkörper aufgesetzt sein, z.B. der Anschlagbund 60.

Die radiale Außenfläche des Anschlagbundes 60 des Anschlagzapfens 58 ist von der zylindrischen Wandung der Einsenkung beabstandet, wodurch Spalt gebildet ist, in dem das Hydrauliköl strömen kann.

Der Anschlagbund 60 bildet einen axialen Anschlag aus, ebenso der Boden des Niveauregelzylinders 18. Diese beiden axialen Anschläge begrenzen die maximale Hubhöhe, die zur Niveauregulierung zur Verfügung steht.

Die Funktion des Niveauregelsystems 10 lässt sich wie folgt beschreiben:
Im in Fig. 1 gezeigten Zustand ist das Niveauregelsystem 10 komplett eingefahren. Auch eine Nachjustierung zum Ausgleichs des Verschleißes der Radreifen ist hier nicht erfolgt.

Mit anderen Worten ist der Niveauregelkolben 16 vollständig im Niveauregelzylinder 14 eingefahren.

Weiter ist die Kolbenhülse 20 derart zum Kolbengrundkörper 22 angeordnet, dass der Niveauregelkolben 16 die kleinstmögliche axiale Ausdehnung bzw. Länge aufweist.

Dieser Zustand wird bei leerem Fahrzeug (hier ist insbesondere zu beachten, dass der Niveauregelzylinder 14 nicht auf der Notfeder 26 aufliegt und die Sekundärfeder 28 nicht vollständig eingefedert ist) sowie bei nicht verschlissenen Radreifen gewählt.

Das Ausfahren des Niveauregelkolbens 16 aus dem Niveauregelzylinder 14 erfolgt durch hydraulische Betätigung und durch Einströmen von Hydrauliköl in die Einsenkung 23 über die Hydraulikölführungskanäle 34.

Das Einfahren erfolgt entsprechend durch ein Ausströmen bzw. Entnahme von Hydrauliköl aus der Einsenkung 23 über die Hydraulikölführungskanäle 34.

Der hydraulische Druckraum, der zwischen Niveauregelkolben 16 und Niveauregelzylinder 14 insbesondere in der Einsenkung 23 ausgebildet wird, wird durch radiale Dichtungen, hier ein O-Ring 62 zwischen Kolbenhülse 20 und Niveauregelzylinder 14 sowie ein O-Ring 64 zwischen Kolbenhülse 20 und Kolbengrundkörper 22, dichtend begrenzt.

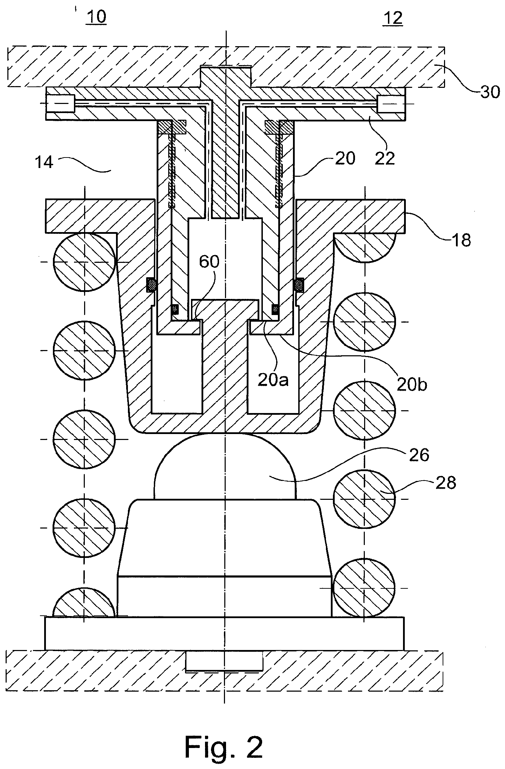

Flg. 2 zeigt in schematischer Schnittdarstellung das in Fig. 1 gezeigte Ausführungsbeispiel des Niveauregelsystems 10 bei ausgefahrenem Niveauregelzylinder 18 bei vollbeladenem Schienenfahrzeug 12 und nicht verschlissenen Radreifen (nicht näher gezeigt).

Die Verschleißnachjustierung ist hier nicht aktiviert, d.h. die Kolbenhülse 20 ist in Bezug auf den Kolbengrundkörper 22 nicht ausgefahren, sondern in einem vollständig eingefahrenen Zustand, der den Zustand für nicht verschlissene Radreifen repräsentiert.

Dabei ist das distale Ende des Kolbengrundkörpers 22 auf der ringartigen, nach innen gewandten Wandung 20a aufliegend.

Bei vollausgefahrenem Niveauregelzylindermodul 14 ist jedoch die Wandung 20a an dem Anschlagbund 60 anliegend, d.h. die maximale Hubhöhe des Niveauregelzylinders 18 ist hier erreicht.

Dabei liegt die äußere Axialfläche des Niveauregelzylinders 18 auch auf der Notfeder 26 auf.

Gleichzeitig ist die Sekundärfeder 28 vollständig eingefedert.

Über die durch das Niveauregelzylindermodul 14 bereitgestellte zusätzliche Hubhöhe kann diese Einfederung kompensiert werden. Gleiches gilt auch für Niveauunterschiede zwischen Wagenkasten 30 und einer Bahnsteigkante, die so ausgeglichen werden können.

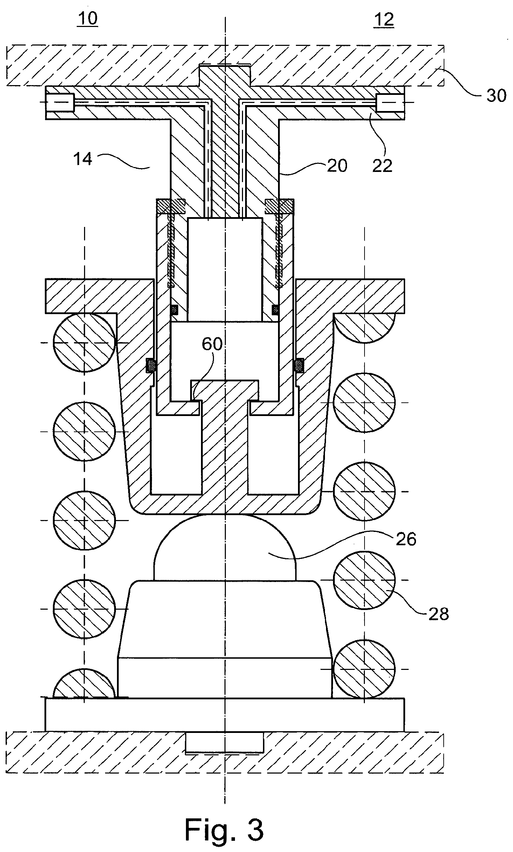

Fig. 3 zeigt eine vergleichbare Situation wie in Fig. 2, lediglich mit dem Unterschied, dass hier die Radreifen komplett verschlissen sind.

Insoweit muss eine zusätzliche Verschleißnachjustierung realisiert werden, die dadurch geschieht, dass insgesamt der Kolben in seiner axialen Ausmessung dadurch verlängert wird, dass die Kolbenhülse 20 relativ zum Kolbengrundkörper 22 ausgefahren wird.

Dies erfolgt im gezeigten Fall durch die vorgesehenen Verstellpositionen, die jeweils entsprechend abgesichert werden können, beispielsweise durch einen Sprengring 54, wie bereits vorstehend beschrieben und in Fig. 4 im Detail gezeigt.

Alternativ sind auch Sicherungen mit einer Sicherungsschraube, Trapezgewinde oder ein Stufen-Bajonettlösung denkbar.

Fig. 5 zeigt eine schematische Detaildarstellung einer weiteren möglichen Ausführungsform eines Niveauregelsystems 110.

Das Niveauregelsystems 110 weist dabei sämtliche strukturellen und funktionalen Merkmale auf wie das vorstehend im Zusammenhang mit Fig. 1 bis Fig. 4 beschriebene Niveauregelsystems 10.

Vergleichbare oder identische Merkmale sind mit einem Bezugszeichen versehen, dass um den Betrag 100 erhöht ist im Vergleich zu den Bezugszeichen gemäß Fig. 1 bis Fig. 4.

Ein Unterschied ist jedoch, dass hier ein radial außen liegender Anschlag 120a für die Kolbenhülse 120 vorgesehen ist, der an einem Ansatz 118a des Niveauregelzylinders 118 anschlagen kann.

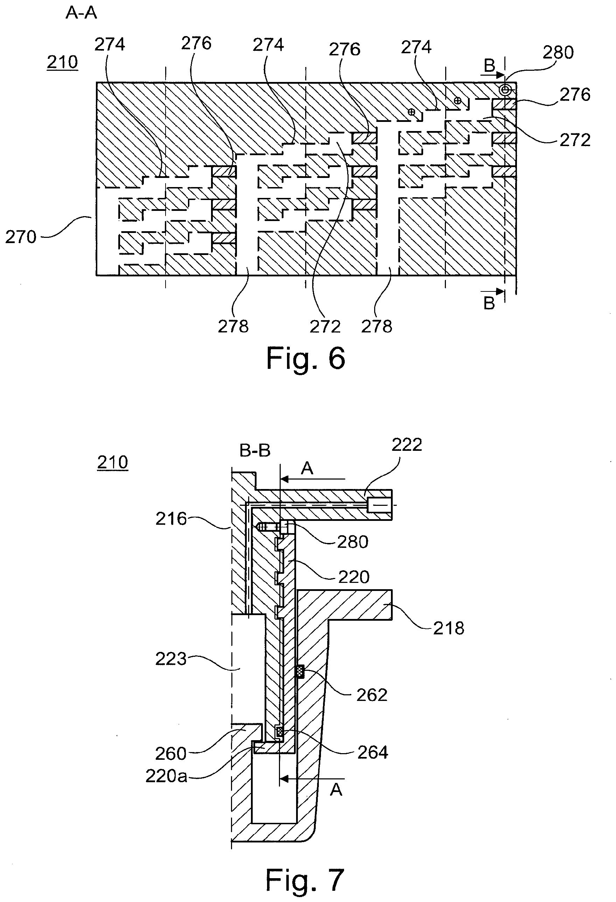

Fig. 6 zeigt eine Detaildarstellung für ein mögliches System zur Verschleißnachjustierung in Form eines Stufen-Bajonetts für eine weitere Ausführungsform eines Niveauregelsystems 210 (Schnitt A-A gemäß Fig. 7).

Das Niveauregelsystems 210 weist dabei sämtliche strukturellen und funktionalen Merkmale auf wie das vorstehend im Zusammenhang mit Fig. 1 bis Fig. 4 beschriebene Niveauregelsystems 10.

Vergleichbare oder identische Merkmale sind mit einem Bezugszeichen versehen, dass um den Betrag 200 erhöht ist im Vergleich zu den Bezugszeichen gemäß Fig. 1 bis Fig. 4.

Ein Unterschied ist jedoch, dass hier ein Bajonettsystem 270 vorgesehen ist.

Das Bajonettsystem 270 ist ein Stufenbajonettsystem ist, bei dem mehrere nacheinander angeordnete Bajonettstufen 272 vorgesehen sind.

Hierzu können in mehreren parallel zueinander angeordneten Bajonettrillen 274 entsprechende Bajonettzapfen 276 eingreifen, die nach Verlassen der Bajonettrillen 274 in einem entsprechenden Führungsgang 278 axial bezogen auf die Längsachse des Niveauregelkolbens 216 verschoben werden können, um eine weitere Bajonettstufen 272 zu erreichen.

Der Versatz der Bajonettstufen 272 zueinander ermöglicht eine Verschleißnachjustierung und eine Verstellung von Kolbenhülse 220 relativ zum Kolbengrundkörper 222.

Es kann in diesem Zusammenhang vorgesehen sein, dass der Kolbengrundkörper 222 relativ zur Kolbenhülse 220 durch Druckbeaufschlagung bzw. Druckabsenkung axial verschieblich ist. Durch entsprechende Druckeinstellung kann Nachjustierung und das Verschieben von Kolbengrundkörper 222 relativ zur Kolbenhülse 220 unterstützt werden.

Hierzu wird beispielsweise der Arbeitsdruck im System von Niveauregelkolben 216 und Niveauregelzylinder 218 erhöht bzw. erniedrigt, d.h. durch Einströmen bzw. Auslassen von Hydrauliköl in die Einsenkung 223, wodurch dann eine entsprechende axiale Verstellung erfolgen kann.

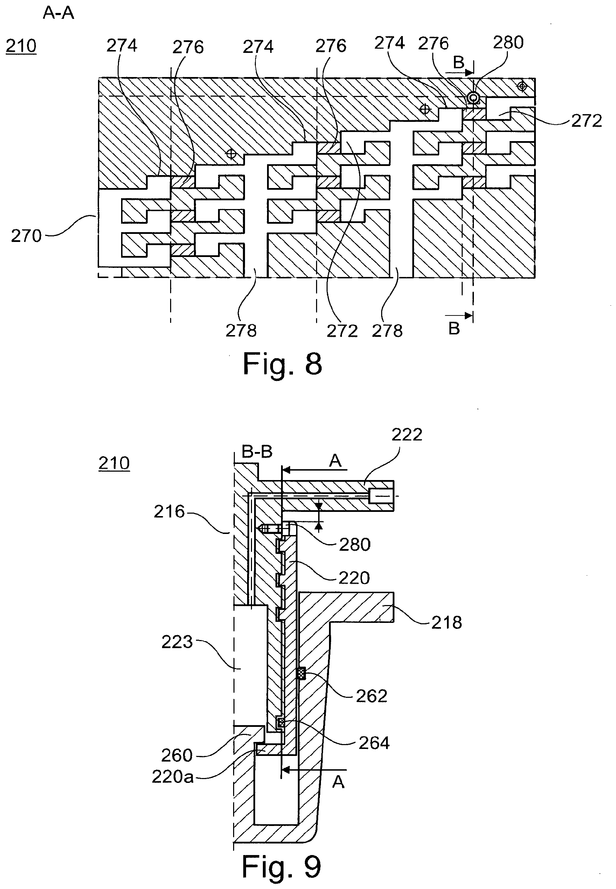

Im bespielhaften Fall einer Bajonettlösung befinden sich die Bajonettzapfen im Bajonettgang 278. Da die Kolbenhülse mit dem Bund 220a am Anschlagbund 260 anliegt, wird nur der Kolben 216 angehoben werden. Beim Erreichen der nächsten Bajonettstufe, kann die Kolbenhülse 220 mit den Bajonettzapfen 276 in die Bajonettrillen 274 der nächsten Stufe gedreht werden (vgl. hierzu Flg. 8 und Fig. 9).

Die hydraulische Verstellung bzw. hydraulische Unterstützung der Nachjustierung ist ebenfalls in vergleichbarer Form in dem in Fig. 1 bis 4 gezeigten Ausführungsbeispiel oder anderen Ausführungsbeispielen der Erfindung denkbar und möglich.

Wie weiter in Flg. 7 gezeigt (Schnitt B-B gemäß Fig. 6), kann die eingenommene Bajonettstufe, die einer Verstellposition entspricht, mittels einer Sicherungsschraube 280 gesichert werden.

Jeder Verstellposition ist dabei ein entsprechendes Einschraubloch für die Sicherungsschraube 280 zugeordnet (vgl. hierzu Fig. 6 und Fig. 8).

### BEZUGSZEICHENLISTE

- 10: Niveauregelsystem
- 12: Schienenfahrzeug
- 14: Niveauragelzylinderrnodul
- 16: Niveauregelkolben
- 18: Niveauregelzylinder
- 18a: flanschartiger Abschnitt
- 18b: zylindrische Führungsfläche
- 18c: axiale Anlagefläche
- 20: Kolbenhülse
- 20a: Wandung
- 20b: Anschlagfläche Kolbenhülse unten
- 22: Kolbengrundkörper
- 23: Einsenkung
- 24: Fahrwerk
- 26: Notfeder
- 28: Sekundärfeder
- 30: Wagenkasten
- 34: Hydraulikölführungskanäle
- 34a: waagrechte Hydraulikölführungskanäle
- 34b: senkrechte Hydraulikölführungskanäle
- 36: Hydraulikanschlüsse
- 38: erster Abschnitt
- 40: zweiter Abschnitt
- 40a: Außenfläche
- 42: Anschlagfläche
- 42a: Anschlagfläche
- 44: Gegenfläche
- 46: Rastpositionen
- 46a: Vertiefung
- 48: Rastpositionen
- 48a: Vertiefung
- 50: Rastpositionen
- 50a: Vertiefung
- 52: Rastpositionen
- 52a: Vertiefung
- 54: Sprengring
- 55: Keilspalt
- 56: Verstellmittel
- 58: Anschlagzapfen
- 60: Anschlagbund
- 62: O-Ring
- 64: O-Ring

- 110: Niveauregelsystem
- 118: Niveauregelzylinder
- 118a: Ansatz
- 120: Kolbenhülse
- 120a: Anschlag

- 210: Niveauregelsystem
- 216: Niveauregelkolben
- 218: Niveauregelzylinder
- 220: Kolbenhülse
- 220a: Bund
- 222: Kolbengrundkörper
- 223: Einsenkung
- 260: Anschlagbund
- 262: O-Ring
- 264: O-Ring
- 270: Bajonettsystem
- 272: Bajonettstufen
- 274: Bajonettrillen
- 276: Bajonettzapfen
- 278: Führungsgang
- 280: Sicherungsschraube

- X: Längsachse

## Patentansprüche

1. Niveauregelsystem (10) für ein Schienenfahrzeug (12), mit wenigstens einem Niveauregelzylinder (18) und einem Niveauregelkolben (16), wobei im Niveauregelzylinder (18) der Niveauregelkolben (16) beweglich geführt ist zur Einstellung des Niveaus des Schienenfahrzeugs (12),
**dadurch gekennzeichnet, dass**
der Niveauregelkolben (16) eine äußere Kolbenhülse und einen in der Kolbenhülse zumindest teilweise aufgenommenen Kolbengrundkörper (22) aufweist, und der Kolbengrundkörper (22) relativ zur Kolbenhülse (20) zur Nachjustierung verschieblich ist und in wenigstens zwei Verstellpositionen (46, 48, 50, 52) feststellbar und/oder fixierbar ist.

2. Niveauregelsystem (10) nach Anspruch 1,
**dadurch gekennzeichnet, dass**
der Niveauregelzylinder (18) hydraulisch betätigbar ist.

3. Niveauregelsystem (10) nach Anspruch 1 und Anspruch 2,
**dadurch gekennzeichnet, dass**
der Kolbengrundkörper (22) relativ zur Kolbenhülse (20) zur Verschleißnachjustierung stufenlos verschieblich ist.

4. Niveauregelsystem (10) nach einem der vorhergehenden Ansprüche,
**dadurch gekennzeichnet, dass**
die Verstellposition derart beschaffen und eingerichtet ist, dass sie eine Verrastung und/oder Verriegelung und/oder Fixierung und/oder Sicherung in der Verstellposition ermöglicht.

5. Niveauregelsystem (10) nach einem der vorhergehenden Ansprüche,
**dadurch gekennzeichnet, dass**
das Niveauregelsystem (10) weiter eine Sekundärfeder umfasst, die um den Niveauregelzylinder (18) und den Niveauregelkolben (16) herum geführt ist, insbesondere wobei die Sekundärfeder eine Schraubenfeder ist.

6. Niveauregelsystem (10) nach einem der vorhergehenden Ansprüche,
**dadurch gekennzeichnet, dass**
eine Verstellposition (46, 48, 50, 52) wenigstens eine Vertiefung (46a, 46b, 48a, 48b, 50a, 50b, 52a, 52b) aufweist.

7. Niveauregelsystem (10) nach einem der vorhergehenden Ansprüche,
**dadurch gekennzeichnet, dass**
wenigstens ein Sicherungsring, insbesondere ein Sprengring (54), und/oder wenigstens eine Feststellschraube und/oder wenigstens ein Sicherungsstift und/oder wenigstens ein Bajonettsystem und/oder wenigstens eine Kugel, insbesondere eine federbelastete Kugel, und/oder wenigstens ein Magnet und/oder ein Klemmelement und/oder Gewindeelement vorgesehen ist, der in der Verstellposition (46, 48, 50, 52) zur Fixierung eingreift.

8. Niveauregelsystem (10) nach einem der vorhergehenden Ansprüche,
**dadurch gekennzeichnet, dass**
im und/oder am Kolbengrundkörper 22) eine mechanische Verstellung, insbesondere eine Einstellschraube (56), aufgenommen oder vorgesehen ist, die im Kolbengrundkörper (22) in wenigstens einer ersten Stellung und in wenigstens einer zweiten Stellung befindlich sein kann, wobei durch Überführung der Einstellschraube (56) von der ersten Stellung in die zweite Stellung der Kolbengrundkörper (22) relativ zur Kolbenhülse (20) zur Nachjustierung von einer Verstellposition (46, 48, 50, 52) zu einer weiteren Verstellposition (46, 48, 50, 52) überführbar ist.

9. Niveauregelsystem (10) nach einem der vorhergehenden Ansprüche,
**dadurch gekennzeichnet, dass**
der Kolbengrundkörper relativ zur Kolbenhülse durch Druckbeaufschlagung und/oder Druckabsenkung axial verschieblich ist.

10. Niveauregelsystem (10) nach einem der vorhergehenden Ansprüche,
**dadurch gekennzeichnet, dass**
der Kolbengrundkörper (22) eine Einsenkung vorgesehen ist, in Hydrauliköl einströmbar ist, insbesondere wobei die Einsenkung zylindrisch oder im Wesentlichen zylindrisch ist.

11. Niveauregelsystem (10) nach Anspruch 10,
**dadurch gekennzeichnet, dass**
in die Einsenkung ein Anschlagzapfen (58) hineinragt.

12. Niveauregelsystem (10) nach Anspruch 11,
**dadurch gekennzeichnet, dass**
der Anschlagzapfen (58) einen im Wesentlichen umlaufenden Anschlagbund (60) aufweist, wobei der Anschlagbund einen größeren Durchmesser aufweist als eine zentrale Öffnung der Kolbenhülse (20), die der Anschlagzapfen (58) im montierten Zustand durchdringt.

13. Niveauregelsystem (10) nach einem der Ansprüche 10 bis 12,
**dadurch gekennzeichnet, dass**
der Hydraulikkolben mehrere Hydraulikölführungskanäle (34) aufweist, durch die Hydrauliköl in die Einsenkung einströmbar ist, insbesondere wobei die Hydraulikölführungskanäle (34) symmetrisch zueinander angeordnet sind.

14. Niveauregelsystem (10) nach einem der vorhergehenden Ansprüche,
**dadurch gekennzeichnet, dass**
das Niveauregelsystem (10) wenigstens Hubbegrenzung für den Hub des Niveauregelkolben (16) in Bezug auf den Niveauregelzylinder (18) aufweist, insbesondere wobei die Hubbegrenzung wenigstens einen axialen Anschlag aufweist.

15. Niveauregelsystem (10) nach einem der vorhergehenden Ansprüche,
**dadurch gekennzeichnet, dass**
der Niveauregelkolben (16) und der Niveauregelzylinder (18) koaxial sind.

16. Niveauregelsystem (10) nach Anspruch 3 und Anspruch 15,
**dadurch gekennzeichnet, dass**
die Einstellschraube (56) koaxial mit dem Niveauregelkolben (16) und dem Niveauregelzylinder (18) ist.

17. Niveauregelsystem (10) nach Anspruch 5 und Anspruch 16,
**dadurch gekennzeichnet, dass**
die Sekundärfeder koaxial mit dem Niveauregelkolben (16) und dem Niveauregelzylinder (18) ist.

18. Niveauregelsystem (10) nach einem der vorhergehenden Ansprüche,
**dadurch gekennzeichnet, dass**
das Niveauregelsystem (10) mittels einer Verbindung zum Wagenkasten oder einer am Wagenkasten befestigten Komponente verbindbar ist, wobei die Verbindung zum Wagenkasten oder zur am Wagenkasten befestigten Komponente auf Seiten des Niveauregelkolbens (16) realisiert ist.

## Claims

1. Level control system (10) for a rail vehicle (12), with at least one level control cylinder (18) and a level control piston (16), wherein the level control piston (16) is guided movably in the level control cylinder (18) in order to adjust the level of the rail vehicle (12),
**characterised in that**
the level control piston (16) comprises an outer piston sleeve and a basic piston body (22) at least partially accommodated in the piston sleeve, and relative to the piston sleeve (20) the basic piston body (22) can be displaced for the purpose of readjustment and can be set and/or fixed in at least two adjustment positions (46, 48, 50, 52).

2. Level control system (10) according to Claim 1,
**characterised in that**
the level control cylinder (18) can be actuated hydraulically.

3. Level control system (10) according to Claim 1 and Claim 2,
**characterised in that**
relative to the piston sleeve (20), the basic piston body (22) can be displaced continuously for wear adjustment.

4. Level control system (10) according to any of the preceding claims,
**characterised in that**
the adjustment position is provided and designed in such manner as to enable retention and/or locking and/or fixing and/or securing in the adjustment position.

5. Level control system (10) according to any of the preceding claims,
**characterised in that**
the level control system (10) also comprises a secondary spring, which is arranged around the level control cylinder (18) and the level control piston (16), such that in particular the secondary spring is a helical spring.

6. Level control system (10) according to any of the preceding claims,
**characterised in that**
an adjustment position (46, 48, 50, 52) comprises at least one recess (46a, 46b, 48a, 48b, 50a, 50b, 52a, 62b).

7. Level control system (10) according to any of the preceding claims,
**characterised in that**
at least one retaining ring, in particular a circlip (54), and/or at least one fixing screw and/or at least one locking pin and/or at least one bayonet system and/or at least one ball, in particular a spring-loaded ball, and/or at least one magnet and/or a clamping element and/or a threaded element is provided, which engages in the adjustment position for fixing purposes.

8. Level control system (10) according to any of the preceding claims,
**characterised in that**
a mechanical adjustment means, in particular an adjusting screw (56), is arranged or provided in and/or on the basic piston body (22), which means can be positioned in at least a first position and in at least a second position, so that by moving the adjusting screw (56) from the first position to the second position, the basic piston body (22) can be displaced relative to the piston sleeve (20) from one adjustment position (46, 48, 50, 52) to another adjustment position (46, 48, 50, 52) for the purpose of readjustment.

9. Level control system (10) according to any of the preceding claims,
**characterised in that**
the basic piston body can be displaced axially relative to the piston sleeve by the application of pressure and/or by the reduction of pressure.

10. Level control system (10) according to any of the preceding claims,
**characterised in that**
The basic piston body (22) has a recess into which hydraulic oil can flow, and the recess is cylindrical or substantially cylindrical.

11. Level control system (10) according to Claim 10,
**characterised in that**
a stop pin (58) projects into the recess.

12. Level control system (10) according to Claim 11,
**characterised in that**
the stop pin (58) has an essentially all-round stop collar (60), the said stop collar having a larger diameter than a central aperture of the piston sleeve (20), through which the stop pin (58) extends in the assembled condition.

13. Level control system (10) according to any of Claims 10 to 12,
**characterised in that**
the hydraulic piston has a plurality of hydraulic oil ducts (34) through which hydraulic oil can flow into the said recess, and in particular the hydraulic oil ducts (34) are arranged symmetrically relative to one another.

14. Level control system (10) according to any of the preceding claims,
**characterised in that**
the level control system (10) has at least stroke-limiting means for the stroke of the level control piston (16) relative to the level control cylinder (18), in particular such that the stroke-limiting means comprises at least one axial stop.

15. Level control system (10) according to any of the preceding claims,
**characterised in that**
the level control piston (16) and the level control cylinder (18) are coaxial.

16. Level control system (10) according to Claim 3 and Claim 15,
**characterised in that**
the adjusting screw (56) is coaxial with the level control piston (16) and the level control cylinder (18).

17. Level control system (10) according to Claim 5 and Claim 16,
**characterised in that**
the secondary spring is coaxial with the level control piston (16) and the level control cylinder (18).

18. Level control system (10) according to any of the preceding claims,
**characterised in that**
the level control system (10) can be attached by means of a connector to the wagon body or a component fixed to the wagon body, wherein the said connector to the wagon body or component fixed to the wagon body is formed on the level control piston (16).

## Revendications

1. Système (10) de réglage du niveau d'un véhicule (12) ferroviaire, comprenant au moins un cylindre (18) de réglage du niveau et un piston (16) de réglage du niveau, le piston (16) de réglage du niveau étant guidé de manière mobile dans le cylindre (18) de réglage du niveau afin de régler le niveau du véhicule (12) ferroviaire,
**caractérisé en ce que**
le piston (16) de réglage du niveau a un manchon extérieur et un corps (22) de base reçu au moins en partie dans le manchon et le corps (22) de base est coulissant par rapport au manchon (20) pour le post-ajustement et peut être fixé et/ou immobilisé dans au moins deux positions (46, 48, 50, 52) de réglage.

2. Système (10) de réglage du niveau suivant la revendication 1,
**caractérisé en ce que**
le cylindre (18) de réglage du niveau peut être actionné hydrauliquement.

3. Système (10) de réglage du niveau suivant la revendication 1 et revendication 2,
**caractérisé en ce que**
le corps (22) de base du piston est coulissant sans palier par rapport au manchon (20) du piston pour le rattrapage d'usure.

4. Système (10) de réglage du niveau suivant l'une des revendications précédentes,
**caractérisé en ce que**
la position de réglage est telle qu'elle rend possible un encliquetage et/ou un verrouillage et/ou une immobilisation et/ou une sécurisation dans la position de réglage.

5. Système (10) de réglage du niveau suivant l'une des revendications précédentes,
**caractérisé en ce que**
le système (10) de réglage du niveau comprend en outre un ressort secondaire, qui est guidé autour du cylindre (18) de réglage du niveau et du piston (16) de réglage du niveau, le ressort secondaire étant notamment un ressort hélicoïdal.

6. Système (10) de réglage du niveau suivant l'une des revendications précédentes,
**caractérisé en ce que**
une position (46, 48, 50, 52) de réglage a au moins une cavité (46a, 46b, 48a, 48b, 50a, 50b, 52a, 52b).

7. Système (10) de réglage du niveau suivant l'une des revendications précédentes,
**caractérisé en ce que**
il est prévu au moins un anneau de sécurité, notamment un joint (54) élastique et/ou au moins une vis de fixation et/ou au moins une broche de sécurité et/ou au moins un système à baïonnette et/ou au moins une bille, notamment une bille soumise à l'action d'un ressort, et/ou au moins un aimant et/ou un élément de serrage et/ou un élément fileté, qui pénètre dans la position (46, 48, 50, 52) de réglage pour l'immobilisation.

8. Système (10) de réglage du niveau suivant l'une des revendications précédentes,
**caractérisé en ce que**,
dans et/ou sur le corps (22) de base du piston est reçu ou est prévu un réglage mécanique, notamment une vis (66) de réglage, qui peut, dans le corps (22) de base du piston, se trouver dans au moins une première position et dans au moins une deuxième position, dans lequel par passage de la vis (56) de réglage de la première position à la deuxième position, le corps (22) de base du piston peut, par rapport au manchon (20) du piston, pour le post-ajustement passer d'une position (46, 48, 50, 52) de réglage à une autre position (46, 48, 50, 52) de réglage.

9. Système (10) de réglage du niveau suivant l'une des revendications précédentes,
caractérisé'en ce que
le corps de base du piston est coulissant axialement par rapport au manchon du piston sous l'effet d'une pression ou d'une diminution de pression.

10. Système (10) de réglage du niveau suivant l'une des revendications précédentes,
**caractérisé en ce que**,
dans le corps (22) de base du piston est prévu un renfoncement, dans lequel peut entrer de l'huile hydraulique, notamment le renfoncement est cylindrique ou sensiblement cylindrique.

11. Système (10) de réglage du niveau suivant la revendication 10, **caractérisé en ce que**
un tenon (58) de butée pénètre dans le renfoncement.

12. Système (10) de réglage du niveau suivant la revendication 11, **caractérisé en ce que**
le tenon (58) de butée a un collet (60) de butée faisant sensiblement le tour, le collet de butée ayant un diamètre plus grand qu'une ouverture centrale du manchon (20) du piston dans lequel le tenon (58) de butée passe à l'état monté.

13. Système (10) de réglage du niveau suivant l'une des revendications 10 à 12,
**caractérisé en ce que**
le piston hydraulique a plusieurs canaux (34) de conduite d'huile hydraulique, par lesquels de l'huile hydraulique peut entrer dans le renfoncement, dans lequel notamment les canaux (34) de conduite d'huile hydraulique sont disposés symétriquement les uns par rapport aux autres.

14. Système (10) de réglage du niveau suivant l'une des revendications précédentes,
**caractérisé en ce que**
le système (10) de réglage du niveau a au moins une limitation de la course du piston (16) de réglage du niveau par rapport au cylindre (18) de réglage du niveau, la limitation de la course ayant notamment au moins une butée axiale.

15. Système (10) de réglage du niveau suivant l'une des revendications précédentes,
**caractérisé en ce que**
le piston (16) de réglage du niveau et le cylindre (18) de réglage du niveau sont coaxiaux.

16. Système (10) de réglage du niveau suivant la revendication 3 et la revendication 15,
**caractérisé en ce que**
la vis (56) de réglage est coaxiale au piston (16) de réglage du niveau et au cylindre (18) de réglage du niveau.

17. Système (10) de réglage du niveau suivant la revendication 5 et revendication 16,
**caractérisé en ce que**
le ressort secondaire est coaxial au piston (16) de réglage du niveau et au cylindre (18) de réglage du niveau.

18. Système (10) de réglage du niveau suivant l'une des revendications précédentes,
**caractérisé en ce que**
le système (10) de réglage du niveau peut être, au moyen d'une liaison, relié à la caisse ou à un élément fixé à la caisse, la liaison à la caisse ou à l'élément fixé à la caisse étant réalisée du côté du piston (16) de réglage du niveau.
